# EUROPEAN PATENT APPLICATION

(11) **EP 1 655 968 A2**
(43) Date of publication of application: **10.05.2006**
(21) Application number: 05256866.4
(22) Date of filing: 07.11.2005
(51) Int. Cl.: H04N 7/26, H04N 7/50, G06F 17/14

(54) **Method and apparatus for encoding and decoding image data**

(30) Priority: 09.11.2004 KR 2004090894
(71) Applicant: Samsung Electronics Co., Ltd., Suwon-si, Gyeonggi-Do (KR)
(72) Inventor: Kim, Wooshik, c/o 109-1106 Dongseong 1-cha Apt., Yongin-si, Gyeonggi-do (KR)
(74) Representative: Ertl, Nicholas Justin

(57) **Abstract**

A method of encoding and decoding image data, and an apparatus to perform the method, are provided. The image data encoding method includes: DCT transforming and quantizing pixel values of a block of image data to form a transformed block of image data; determining a classification mode used to classify the transformed block into a first region having one or more coefficients other than 0, and a second region having all coefficients of 0, based on a diagonal of the transformed block; and generating bit streams for the coefficients of the first region according to the determined classification mode and a first bit depth indicating a bit number required to binarize coefficients of the transformed block. The image data encoding method can increase the compression rate and perform encoding in real time while not degrading an image visibly.

## Description

### BACKGROUND OF THE INVENTION

The present invention relates to image compression, and, more particularly, to a method of encoding and decoding image data that encodes and decodes a low frequency region of a converted and quantized conversion block, and an apparatus to perform the method.

Conventionally, an image is encoded by temporally/spatially predicting the image, encoding an RGB signal of the temporally/spatially predicted image, converting and quantizing the encoded RGB signal, and generating bit streams of coefficients of the converted and quantized image. A temporal/spatial prediction is used to remove redundant information among chrominance components of the image in order to encode the image, thereby obtaining a residue image. According to H.264/MPEG-4 pt.10 AVC standard technology, which has been developed by the Joint Video Team (JVT) of the ISO/IEC MPEG and ITU-T VCEG groups, a variety of spatial/temporal prediction encoding methods are used to increase encoding efficiency.

Prediction encoding is performed for each of the chrominance components, i.e., R (red), G (green), and B (blue), of the color image. The redundant information among the RGB chrominance components is not used for the prediction encoding. Therefore, correlations among RGB chrominance components are not used to encode each of the RGB chrominance components, thereby reducing the encoding efficiency.

After encoding each of the RGB chrominance components, an orthogonal conversion & quantization is performed for the RGB signal. The orthogonal conversion & quantization is one method of encoding an image signal or a voice signal with high efficiency by dividing an input signal into suitable blocks and performing the orthogonal conversion for each of the blocks. The number of bits is reduced, and data is compressed, by allocating and quantizing a different number of bits according to power of the converted signal component. Since the power of the image signal is concentrated in a low frequency component, bits are suitably distributed to quantize the image signal and reduce the number of bits. An orthogonal conversion encoding has been developed as a method of encoding and compressing the image with high efficiency. The orthogonal conversion method includes a fast Fourier transform (FFT), a discrete cosine transform (DCT), a Karhunen-Lube transform (KLT), a Hadamard transform, a slant transform, and the like.

However, the conventional encoding method reduces a compression efficiency of the image, while increasing the compression efficiency causes degradation of the image.

### SUMMARY OF THE INVENTION

According to an aspect of the present invention, there is provided a method of encoding image data that increases a compression efficiency of an image while not visibly degrading the image, the method comprising: converting and quantizing pixel values of a block to form a conversion block of image data; determining a classification mode used to classify the conversion block into a first region having one or more coefficients other than 0, and a second region having all coefficients of 0, based on a diagonal of the conversion block; and generating bit streams for the coefficients of the first region according to the determined classification mode and a first bit depth indicating a bit number required to binarize coefficients of the conversion block.

According to another aspect of the present invention, there is provided a method of decoding image data that increases a compression efficiency of an image while not visibly degrading the image, the method comprising: decoding information of a first bit depth indicating a bit number required to binarize coefficients of a conversion block, the conversion block being a block of image data having converted and quantized pixel values; decoding information of bit streams for a classification mode used to classify the conversion block into a first region having one or more coefficients other than 0, and a second region having all coefficients of 0, based on a diagonal of the conversion block; decoding information of bit streams for the coefficients of the conversion block; and inverse quantizing and inverse converting the decoded coefficients of the conversion block.

According to another aspect of the present invention, there is provided an apparatus to encode image data that increases a compression efficiency of an image while not visibly degrading the image, the apparatus comprising: a conversion & quantization unit to convert and quantize pixel values of a block to form a conversion block; a mode determination unit to determine a classification mode used to classify the conversion block into a first region having one or more coefficients other than 0 and a second region having all coefficients of 0 based on a diagonal of the conversion block; and a bit stream generation unit to generate bit streams of the coefficients of the first region according to the determined classification mode and a first bit depth indicating a bit number required to binarize coefficients of the conversion block.

According to another aspect of the present invention, there is provided an apparatus to decode image data that increases a compression efficiency of an image while not visibly degrading the image, the apparatus comprising: a bit depth decoding unit to decode information of a first bit depth indicating a bit number required to binarize coefficients of a conversion block, the conversion block being a block of image data having converted and quantized pixel values; a mode decoding unit to decode information of bit streams for a classification mode used to classify the conversion block into a first region having one or more coefficients other than 0, and a second region having all coefficients of 0, based on a diagonal of the conversion block; a coefficient decoding unit to decode information of bit streams for the coefficients of the conversion block; and an inverse quantization & inverse conversion unit to inverse quantize and inverse convert the decoded coefficients of the conversion block.

The present invention thus provides a method and apparatus for encoding and decoding image data that increases a compression efficiency of an image while not visibly degrading the image.

Additional aspects and/or advantages of the invention will be set forth in part in the description which follows and, in part, will be apparent from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a flow chart illustrating an image data encoding method according to an embodiment of the present invention;
FIG. 2 is a diagram illustrating a distribution range of a low frequency and a high frequency of a 4x4 block on which a discrete cosine transform (DCT) is performed;
FIG. 3A is a diagram illustrating four classification modes of a 4x4 conversion block;
FIG. 3B is a diagram illustrating eight classification modes of the 4x4 conversion block;
FIGS. 4A through 4D are diagrams illustrating four classification modes having the coefficients of FIG. 3A;
FIG. 5 is a flowchart illustrating Operation 18 shown in FIG. 1;
FIG. 6 is a flowchart illustrating an image data decoding method according to an embodiment of the present invention;
FIG. 7 is a block diagram illustrating an image data encoding apparatus according to an embodiment of the present invention;
FIG. 8 is a block diagram illustrating a bit depth determination control unit shown in FIG. 7; and
FIG. 9 is a block diagram illustrating an image data decoding apparatus according to an embodiment of the present invention.

### DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

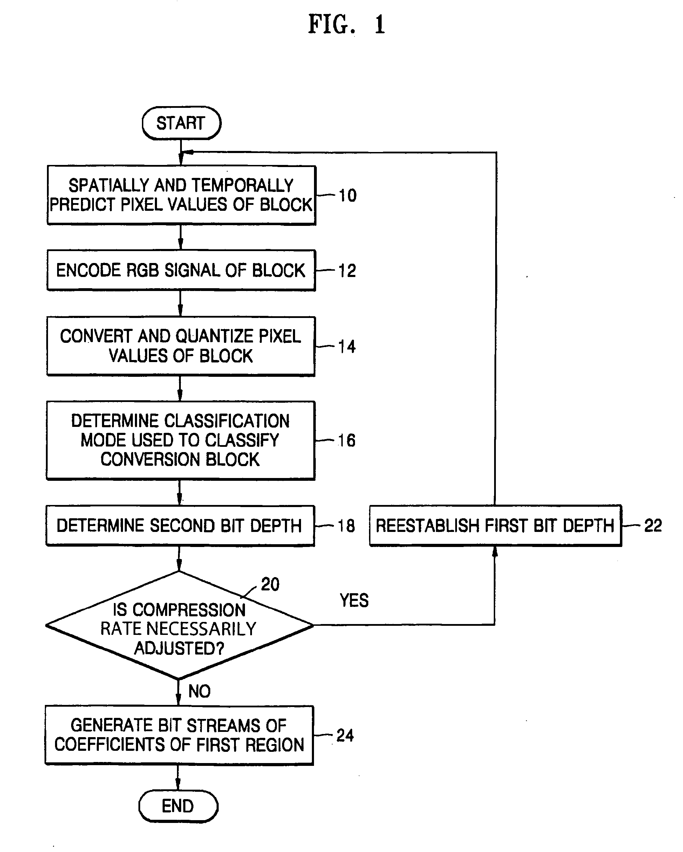

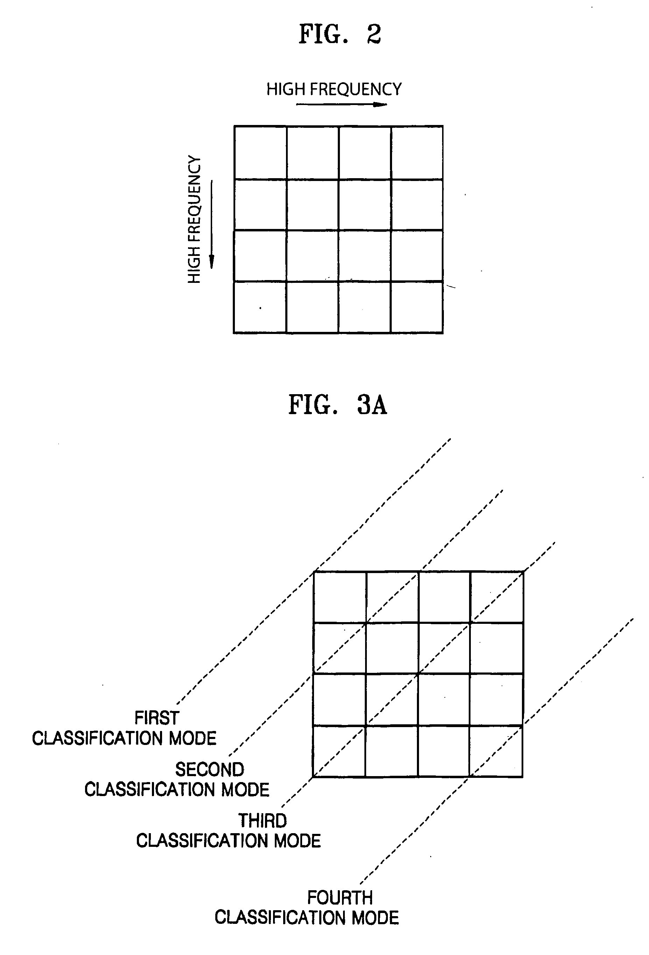

FIG. 1 is a flow chart illustrating an image data encoding method according to an embodiment of the present invention. Referring to FIG. 2, pixel values of a current block are predicted using blocks spatially adjacent to the current block, or temporally previous frames (Operation 10). Spatial redundant information of the current block is removed using blocks spatially adjacent to the current block, which is referred to as an intra prediction. Temporal redundant information of the current block is removed using a frame temporally previous to a frame of the current block, which is referred to as an inter prediction. Spatially predicted pixel values are obtained by estimating a prediction direction from blocks spatially adjacent to the current block of each chrominance component (R, G, B). Temporally predicted pixel values are obtained by estimating motions between the current block and previous frames of each chrominance component (R, G, B).

Redundant information among RGB pixel values of the current block is removed, and an RGB signal having no redundant information is encoded (Operation 12). When pixel values of each of the RGB chrominance components of an RGB image are directly spatially predicted, correlations among spatially predicted pixel values of each of the RGB chrominance components are used to remove redundant information and encode the RGB signal having no redundant information. When pixel values of each of the RGB chrominance components of the RGB image are directly temporally predicted, correlations among temporally predicted pixel values of each of the RGB chrominance components are used to remove redundant information and encode the RGB signal having no redundant information

Pixel values of the current block are converted and quantized (Operation 14). Orthogonal transfer encoding is used to convert pixel values. A discrete cosine transform (DCT) is widely used as the orthogonal transfer encoding. The DCT uses a discrete cosine function as a coefficient to convert the image signal on a temporal axis into an image signal on a frequency axis in the same manner as a fast Fourier transform (FFT). The DCT is used to divide the image signal on the temporal axis into a high frequency region and a low frequency region based on the power of several signals. Since the power of the image signal is concentrated in the low frequency region, bits are suitably distributed to quantize the image signal and reduce the number of entire bits.

FIG. 2 is a diagram illustrating a distribution range of a low frequency and a high frequency of a 4x4 block on which the DCT is performed. Referring to FIG. 2, when the DCT is performed on the 4x4 block, image signal power of the low frequency is distributed toward the upper left corner of the 4x4 block, and image signal power of the high frequency is distributed toward the bottom right corner of the 4x4 block.

When the converted and quantized block is a conversion block, a classification mode is determined to classify the conversion block into a first region having one or more coefficients other than 0, and a second region having all coefficients equal to 0, among the coefficients of the conversion block based on a diagonal of the conversion block (Operation 16). The classification mode is used to classify the conversion block into a region having all coefficients of 0, and another region having coefficients other than 0, based on the diagonal of the conversion block.

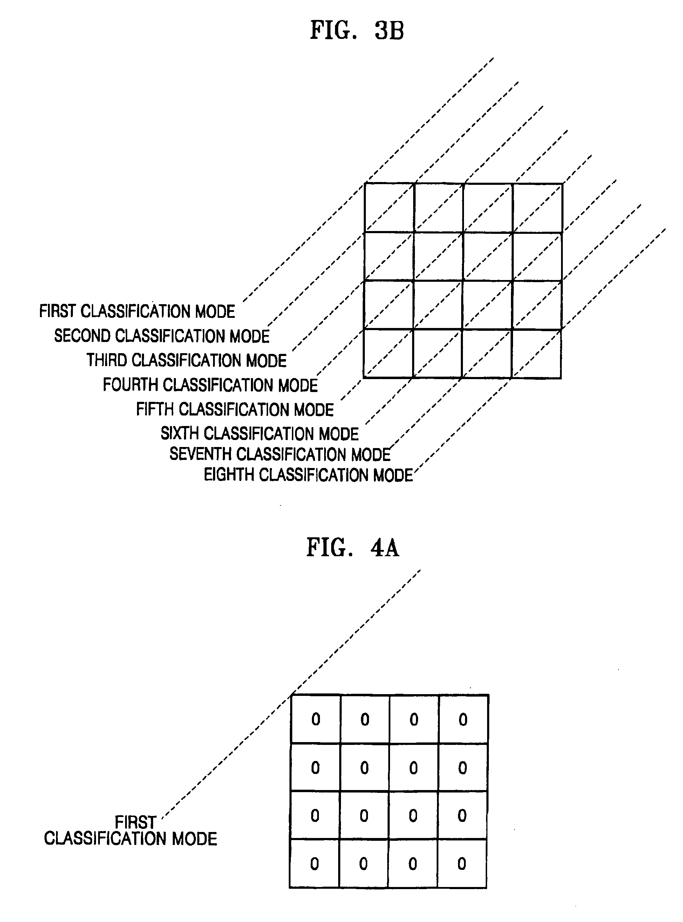

FIG. 3A is a diagram illustrating four classification modes of a 4x4 conversion block. FIG. 3B is a diagram illustrating eight classification modes of the 4x4 conversion block.

Referring to FIG. 3A, dotted diagonals of first through fourth classification modes are randomly positioned in the 4x4 conversion block. A 2-bit number of binary bit streams is used to identify first through fourth classification modes. For example, when identification information of the first classification mode is 0, its bit stream is 00, when identification information of the second classification mode is 1, its bit stream is 01, when identification information of the third classification mode is 2, its bit stream is 10, and when identification information of the fourth classification mode is 3, its bit stream is 11.

Referring to FIG. 3B, a 3-bit number of binary bit streams is used to identify first through eighth classification modes in the 4x4 conversion block. For example, when identification information of the first classification mode is 0, its bit stream is 000, when identification information of the second classification mode is 1, its bit stream is 001, when identification information of the third classification mode is 2, its bit stream is 010, when identification information of the fourth classification mode is 3, its bit stream is 011, when identification information of the fifth classification mode is 4, its bit stream is 100, when identification information of the sixth classification mode is 5, its bit stream is 101, when identification information of the seventh classification mode is 6, its bit stream is 110, and when identification information of the eighth classification mode is 7, its bit stream is 111.

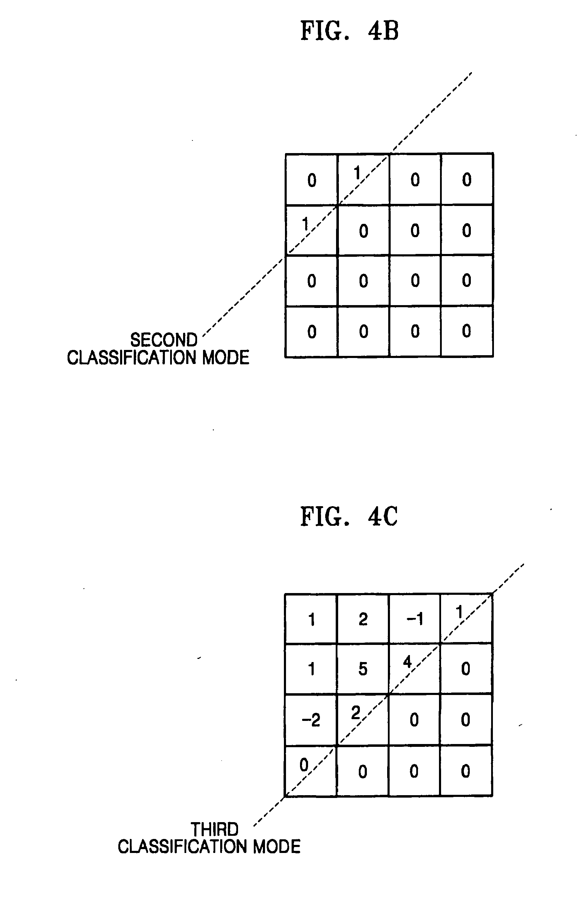

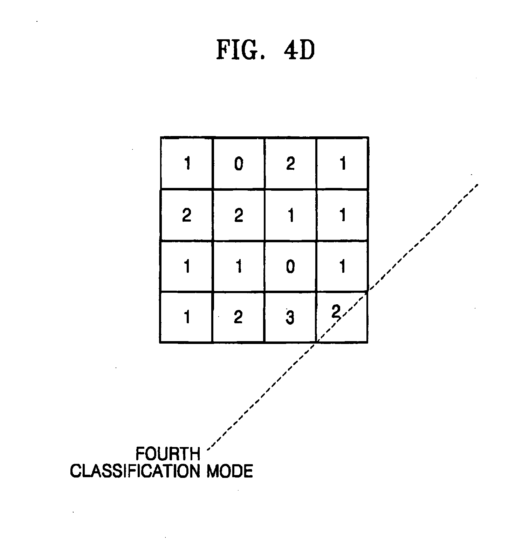

FIGS. 4A through 4D are diagrams illustrating four classification modes having the coefficients of FIG. 3A. Referring to FIG. 4A, a diagonal of the first classification mode is positioned at the upper leftmost corner of the conversion block, which is referred to as a skip mode. The skip mode does not have a first region having one or more coefficients other than 0, but has a second region having only all coefficients equal to 0. A classification mode having coefficients equal to in of the conversion block is determined as the first classification mode. Referring to FIG. 4B, a diagonal of the second classification mode is positioned at the upper left corner of the conversion block. The second classification mode has the first region having one or more coefficients other than 0, and the second region having only coefficients equal to 0. A classification mode having coefficients equal to 0 in the right bottom of the conversion block based on the diagonal of the second classification mode is determined as the second classification mode. Referring to FIG. 4C, a diagonal of the third classification mode is positioned at the center of the conversion block. The third classification mode has the first region having one or more coefficients other than 0, and the second region having only coefficients equal to 0. A classification mode having coefficients equal to 0 in the right bottom of the conversion block based on the diagonal of the third classification mode is determined as the third classification mode. Referring to FIG. 4D, a diagonal of the fourth classification mode is positioned at the right bottom of the conversion block. The fourth classification mode does not have the second region having only coefficients equal to 0, but has the first region having one or more coefficients other than 0. A classification mode having coefficients other than 0 in the right bottom of the conversion block based on the diagonal of the fourth classification mode is determined as the fourth classification mode.

Eight classification modes, as shown in FIG. 3B, are derived in the same manner as described and shown in FIGS. 4A through 4D regarding the four classification modes. The description of the eight classification modes shown in FIG. 3B is thereby omitted for the sake of brevity.

A second bit depth that indicates a bit number required to binarize coefficients of the first region is determined according to whether coefficients of the first region are within a predetermined value range (Operation 18). The bit depth is a bit number used to store information on each pixel in a computer graphic. The second bit depth is the bit number used to binarize coefficients of the first region.

A look up table that shows the second bit depth to be determined according to the predetermined value range is shown below.

**<Table 1 >**

| identification information of classification modes | predetermined value range of coefficients of the first region | second bit depth |
|---|---|---|
| 1 | -2 to 1 | 2 |
| 2 | -4 to 3 | 3 |
| 3 | -4 to 3 | 3 |

Supposing that the identification information of classification modes in Table 1 indicates identification information of the second, third, and fourth classification modes of the 4X4 conversion block shown in FIG. 3A, identification information of the second classification mode is 1, identification information of the third classification mode is 2, and identification information of the fourth classification mode is 3. The first classification mode, that is, the skip mode, is not included in Table 1. The skip mode does not generate bit streams of coefficients at Operation 24, which will be discussed later in this detailed description, and thus is not included in Table 1.

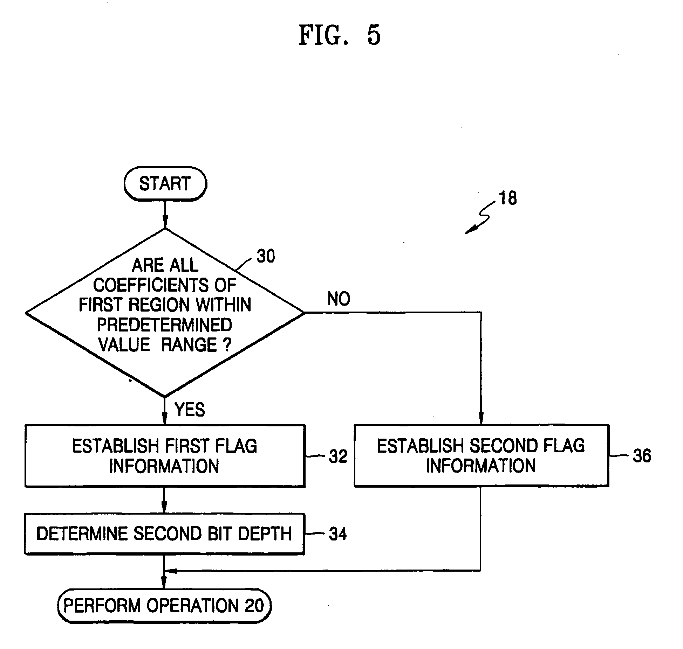

FIG. 5 is a flowchart illustrating Operation 18 shown in FIG. 1. Referring to FIG. 5, it is determined whether coefficients of the first region are within the predetermined value range (Operation 30). Suppose that the predetermined value range is -2 to 1 as shown in Table 1, and the second classification mode (having identification information of 1) is determined at Operation 16. It is then determined whether coefficients of the first region of the second classification mode are within the predetermined value range of -2 to 1.

If coefficients of the first region of the second classification mode are within the predetermined value range of -2 to 1, first flag information showing that the coefficients of the first region of the second classification mode are within the predetermined value range of -2 to 1 is established (Operation 32). Referring to FIG. 4B, which indicates the second classification mode, coefficients of the first region, corresponding to a low frequency signal based on a position of the diagonal of the second classification mode, are within the predetermined value range of -2 to 1. Therefore, the first flag information indicates that the coefficients of the first region are within the predetermined value range of -2 to 1. Since the first flag information is indicated as 0 or 1 in a binary bit stream, a 1-bit number is used to binarize the first flag information.

The second bit depth is determined in response to the established first flag information (Operation 34). The second bit depth is determined according to the types of classification modes, and the predetermined value ranges. The second bit depth is determined as 2, satisfying the second classification mode having the identification information of classification modes of 1 and the predetermined value range of -2 to 1. The second bit depth of 2 is determined so as to generate bit streams of coefficients of the first region.

The second bit depth can be determined as a fixed bit depth regardless of the types of classification modes.

If one or more coefficients of the first region are beyond the predetermined value range, second flag information showing that one or more of the coefficients of the first region are beyond the predetermined value range is established (Operation 36). Suppose that the predetermined value range previously determined is -4 to 3 as shown in Table 1, and the third classification mode (having identification information of 2) is determined at Operation 16. Referring to FIG. 4C, it is determined whether any of the coefficients of the first region of the second classification mode region, corresponding to the low frequency signal based on the position of the diagonal of the third classification mode, are beyond a predetermined value range of -4 to 3. The second flag information will then indicate that one or more coefficients of the first region are beyond the predetermined value range of -4 to 3. Since the second flag information is indicated as 0 or 1 in a binary bit stream, a 1-bit number is used to binarize the second flag information. If the first flag information is expressed as the bit stream of 1, the second flag information is expressed as the bit stream of 0.

It is then determined whether a compression rate of the block is necessarily adjusted (Operation 20).

If the compression rate of the block is necessarily adjusted, a first bit depth that indicates the bit number required to binarize coefficients of the conversion block is reestablished (Operation 22), and Operation 10 is again performed. The first bit depth is the bit number used to binarize coefficients of the conversion block. A quantization adjustment value used to adjust a quantization interval is used to reestablish the first bit depth. The first bit depth corresponding to the quantization adjustment value is shown in Table 2.

**<Table 2>**

| first bit depth [bit] | qunatization adjustment value |
|---|---|
| 12 | 0 |
| 11 | 6 |
| 10 | 12 |
| 9 | 18 |
| 8 | 24 |
| 7 | 30 |
| 6 | 36 |

As shown in Table 2, the higher the qunatization adjustment value, the smaller the first bit depth. A small first bit depth indicates a small bit number used to binarize coefficients of the conversion block. Since the small bit number is used to express the coefficients of the conversion block, the small first bit depth indicates a high compression rate. In order to increase the compression rate, the quantization adjustment value is increased to make the first bit depth small. However, increasing the compression rate causes degradation of an image quality. On the contrary, in order to reduce the compression rate, the quantization adjustment value is reduced to make the first bit depth large.

If the compression rate of the block is not necessarily adjusted, bit streams of the coefficients of the first region are generated according to a determined classification mode and the second bit depth (Operation 24). Supposing that the predetermined value range is -2 to 1 as shown in Table 1, and the second classification mode is determined at Operation 16, the second bit depth is determined as 2 as shown in Table 1. Referring to FIG. 4B, which illustrates the second classification mode, the bit stream of coefficient of 0 is 00, and the bit stream of two coefficients of 1 is 01 according to the second bit depth.

When every coefficient of the conversion block is 0, bit streams are generated for the identification information of classification modes. Referring to FIG. 4A, the first classification mode has coefficients of the conversion block as 0. In this case, bit streams are not generated for converted and quantized coefficients, but for identification information of the first classification mode of 0. Since four classification modes are expressed as a 2-bit number, the bit stream for identification information of the first classification mode, 0, is 00.

When the total bit number of bit streams generated for coefficients of the first region is more than or the same as the total bit number of bit streams generated for pixel values of the block, bit streams are generated for pixel values of the block. When the 4x4 block ,before being converted and quantized, has pixel values having 8-bit depth, if bit streams are generated for pixel values of the 4x4 block without being compressed, the total bit number is 16x8=128 [bit]. When the total bit number of coefficients of the first region generated using the first bit depth or the second bit depth is more than or the same as 128[bit], bit streams are not generated for converted and quantized coefficients, but for pixel values of the 4x4 block before being converted.

Since Operation 18 is not necessarily required in this embodiment of the present invention, and it can be omitted, bit streams are generated for coefficients of the first region according to the classification mode and the first bit depth determined at Operation 24. When the second bit depth is not determined due to establishment of the second flag information, bit streams are generated for coefficients of the first region according to the classification mode and the first bit depth determined at Operation 24. Suppose that the predetermined value range is -4 to 3, and the classification mode determined at Operation 16 is the third classification mode. Referring to FIG. 4C, showing the third classification mode, the second flag information showing that coefficients of the first region are beyond the value range of -4 to 3 is established at Operation 18. If the second flag information is established at Operation 18, and thus the second bit depth is not determined, bit streams are generated for coefficients of the first region according to the first bit depth (e.g., 9[bit]) previously determined.

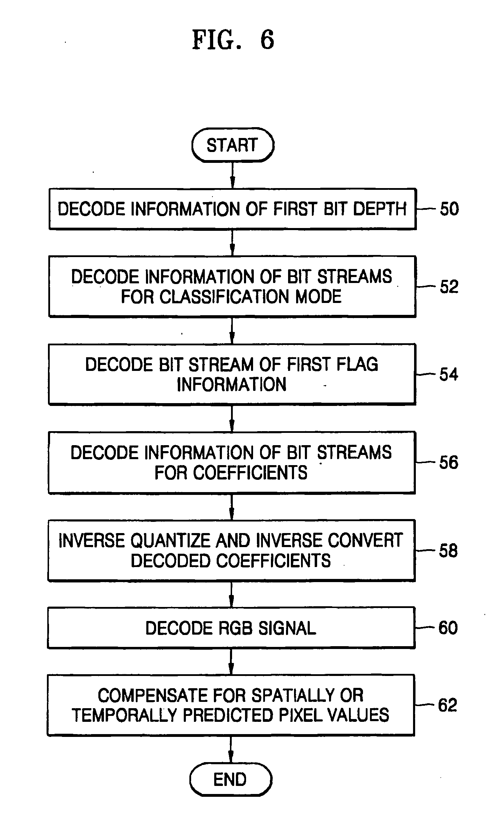

FIG. 6 is a flowchart illustrating an image data decoding method according to an embodiment of the present invention. A conversion block is a block having converted and quantized pixel values. Information of the first bit depth, indicating a bit number required to binarize coefficients of the conversion block, is decoded (Operation 50). When the first bit depth, previously determined or reestablished during the encoding operation, has information of 9[bit], information of 9[bit] is decoded.

Information of bit streams is decoded for classification modes used to classify the conversion block into the first region having one or more coefficients other than 0, and the second region having all coefficients of 0, in coefficients of the conversion block based on the diagonal of the conversion block (Operation 52). If the bit stream of the classification mode generated during the encoding operation is a bit stream of the second classification mode, as shown in FIG. 4B, the bit stream of the second classification mode, 01, is decoded.

The bit stream of the first flag information indicating that coefficients of the first region are within the predetermined value range, or the bit stream of the second flag information indicating that one or more coefficients of the first region are beyond the predetermined value range, is decoded (Operation 54). Since coefficients of the first region are within the predetermined value range of -2 to 1, as shown in Table 1, in the second classification mode shown in FIG. 4B, the bit stream of the first flag information is generated in the second classification mode at the encoding operation. The first flag information in the second classification mode is decoded. Since one or more coefficients of the first region are beyond the predetermined value range of -4 to 3, as shown in Table 1, in the third classification mode shown in FIG. 4C, the bit stream of the second flag information is generated in the third classification mode at the encoding operation. The second flag information in the third classification mode is decoded.

Information of bit streams is decoded for coefficients of the conversion block (Operation 56). One 00 and two 01 s, which are bit streams for coefficients of the first region of FIG. 4B, are sequentially decoded.

The decoded coefficients of the conversion block are inverse quantized and inverse converted (Operation 58) according to an inverse process of the conversion and quantization process.

An RGB signal of the inverse quantized and inverse converted conversion block is decoded (Operation 60).

Spatially or temporally predicted pixel values of the conversion block having the decoded RGB signal at the encoding operation are compensated for(Operation 62).

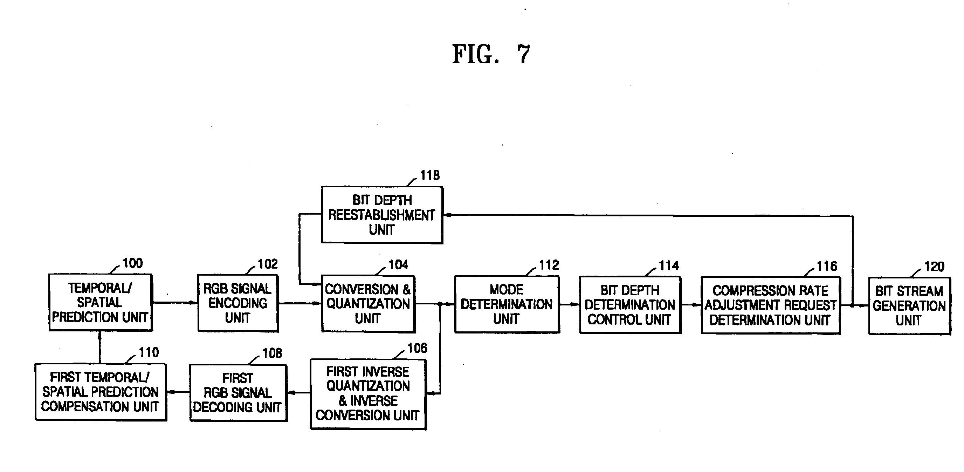

FIG. 7 is a block diagram illustrating an image data encoding apparatus according to an embodiment of the present invention. Referring to FIG. 7, the image data encoding apparatus comprises a temporal/spatial prediction unit 100, an RGB signal encoding unit 102, a conversion & quantization unit 104, a first inverse quantization & inverse conversion unit 106, a first RGB signal decoding unit 108, a first temporal/spatial prediction compensation unit 110, a mode determination unit 112, a bit depth determination control unit 114, a compression rate adjustment request determination unit 116, a bit depth reestablishment unit 118, and a bit stream generation unit 120.

The temporal/spatial prediction unit 100 spatially predicts pixel values of a current block using blocks spatially adjacent to the current block, or temporally predicts pixel values of the current block using frames temporally previous to the frame of the current block, and outputs predicted pixel values to the RGB signal encoding unit 102. The temporal/spatial prediction unit 100 performs the spatial prediction that removes spatial redundant information between the current block and blocks adjacent to the current block, or the temporal prediction that removes temporal redundant information between a current image and images previous to the current image, using the spatial/temporal prediction compensation performed by the first temporal/spatial prediction compensation unit 110, i.e., using restored blocks of the current image.

The RGB signal encoding unit 102 removes redundant information in RGB pixel values of the conversion block in response to the spatial/temporal block prediction, encodes the RGB signal having no redundant information, and outputs the encoded RGB signal to the conversion & quantization unit 104. The RGB signal encoding unit 102 removes redundant information using correlations of spatially and temporally predicted pixel values of chrominance components, R, G, and B, and encodes the RGB signal.

The conversion & quantization unit 104 converts and quantizes pixel values of the conversion block and outputs the converted and quantized pixel values to the first inverse quantization & inverse conversion unit 106 and the mode determination unit 112. The conversion & quantization unit 104 uses the discrete cosine function as a coefficient to convert the image signal of the temporal axis into the image signal of the frequency axis using the DCT of the orthogonal transfer encoding. The conversion & quantization unit 104 divides the image signal of the temporal axis into the high frequency region and the low frequency region based on the power of several signals.

The first inverse quantization & inverse conversion unit 106 receives the converted and quantized pixel values from the conversion & quantization unit 104, inverse quantizes & inverse converts the converted and quantized coefficients of the conversion block, and outputs the inverse quantized & inverse converted coefficients to the first RGB signal decoding unit 108.

The first RGB signal decoding unit 108 receives the inverse quantized & inverse converted coefficients from the first inverse quantization & inverse conversion unit 106, decodes the RGB signal of the conversion block, and outputs the decoded RGB signal to the first temporal/spatial prediction compensation unit 110.

The first temporal/spatial prediction compensation unit 110 receives the decoded RGB signal from the first RGB signal decoding unit 108, compensates for spatially or temporally predicted pixel values of the conversion block, and outputs the compensated pixel values to the temporal/spatial prediction unit 100.

The mode determination unit 112 determines classification modes used to classify the conversion block into the first region having one or more coefficients other than 0, and the second region having all coefficients of 0, in coefficients of the conversion block based on the diagonal of the conversion block, and outputs the determined classification modes to the bit depth determination control unit 114. The mode determination unit 112 determines a classification mode having the second region of the conversion block, 0, among first through fourth classification modes of FIG. 3A, or a classification mode having the second region of the conversion block, 0, among first through eighth classification modes of FIG. 3B.

The bit depth determination control unit 114 controls determination of the second bit depth, indicating a bit number required to binarize coefficients of the first region in response to the classification mode determined by the mode determination unit 112 according to whether coefficients of the first region are within the predetermined value range, and outputs the controlled determination of the second bit depth to the compression rate adjustment request determination unit 116. The bit depth determination control unit 114 stores information such as the look-up table like Table 1 in a predetermined memory in order to determine the second bit depth.

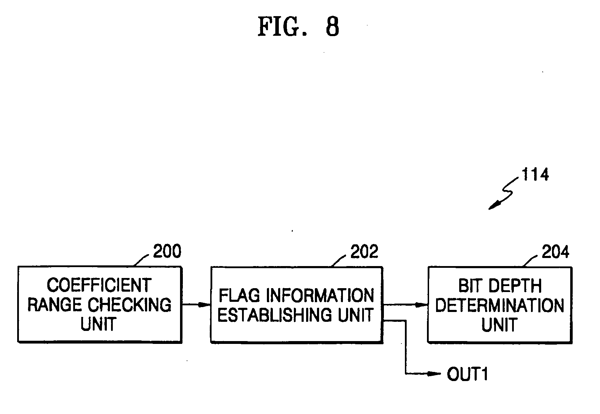

FIG. 8 is a block diagram illustrating the bit depth determination control unit 114 shown in FIG. 7. The bit depth determination control unit comprises a coefficient range checking unit 200, a flag information establishing unit 202, and a bit depth determination unit 204.

The coefficient range checking unit 200 determines whether coefficients of the first region are within the predetermined value range, and outputs the result to the flag information establishing unit 202.

If the flag information establishing unit 202 establishes the first flag information, indicating that coefficients of the first region are within the predetermined value range, in response to the determination result from the coefficient range checking unit 200, it then outputs the established first flag information to the bit depth determination unit 204. If the flag information establishing unit 202 establishes the second flag information, indicating that one or more coefficients of the first region are beyond the predetermined value range, it then outputs the established second flag information to the compression rate adjustment request determination unit 116 through an output terminal OUT1.

The bit depth determination unit 204 determines the second bit depth in response to the first flag information established by the flag information establishing unit 202, and outputs the determined second bit depth to the compression rate adjustment request determination unit 116. The bit depth determination unit 204 determines the second bit depth according to the types of classification modes and the predetermined value ranges. The bit depth determination unit 204 may determine the second bit depth as a specific bit depth irrespective of the types of classification modes.

The compression rate adjustment request determination unit 116 determines whether adjustment of the compression rate of the conversion block is requested in response to the controlled determination of the second bit depth by the bit depth determination control unit 114, outputs the determined results that adjustment of the compression rate of the conversion block is requested to the bit depth reestablishment unit 118, and outputs the determined result that adjustment of the compression rate of the conversion block is not requested to the bit stream generation unit 120.

The bit depth reestablishment unit 118 reestablishes the first bit depth in response to the determined result by the compression rate adjustment request determination unit 116, and outputs the reestablished first bit depth to the conversion & quantization unit 104.

The bit stream generation unit 120 generates bit streams for coefficients of the first region according to the classification mode and the second bit depth.

The bit stream generation unit 120 generates the bit stream only for identification information of classification modes when coefficients of the conversion block are 0.

When the total bit number of bit streams generated for coefficients of the first region is more than or the same as the total bit number of bit streams generated for pixel values of the block, the bit stream generation unit 120 generates bit streams for pixel values of the block.

While the bit stream generation unit 120 generates bit streams for coefficients of the first region corresponding to the second bit depth, it generates bit streams for coefficients of the first region corresponding to the first bit depth when the second bit depth is not determined.

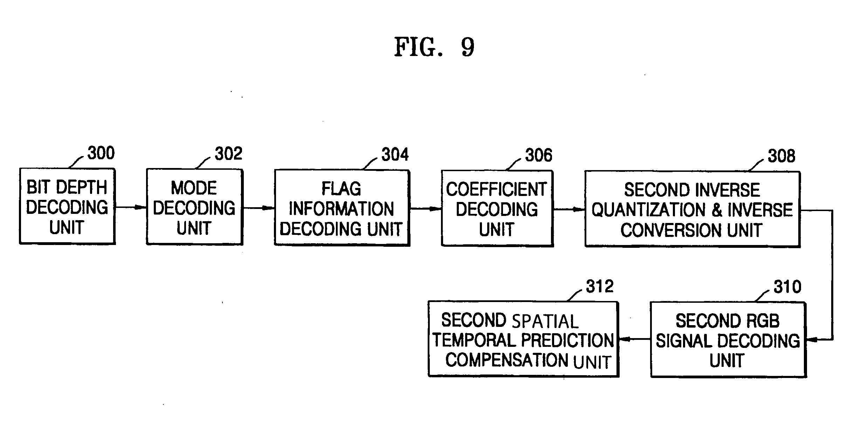

FIG. 9 is a block diagram illustrating an image data decoding apparatus according to an embodiment of the present invention. The image data decoding apparatus comprises a bit depth decoding unit 300, a mode decoding unit 302, a flag information decoding unit 304, a coefficient decoding unit 306, a second inverse quantization & inverse conversion unit 308, a second RGB signal decoding unit 310, and a second spatial/temporal prediction compensation unit 312.

The bit depth decoding unit 300 decodes information of the first bit depth indicating a bit number per bit required to binarize coefficients of the conversion block, and outputs the decoded information of the first bit depth to the mode decoding unit 302. When the first bit depth, previously determined or reestablished at the encoding operation, has information of 9[bit], the bit depth decoding unit 300 decodes information of 9[bit].

The mode decoding unit 302 decodes information of bit streams for classification modes used to classify the conversion block into the first region and the second region in response to the decoded information of the first bit depth of the bit depth decoding unit 300, and outputs the decoded information of bit streams to the flag information decoding unit 304.

The flag information decoding unit 304 decodes information of a bit stream of the first flag information indicating that coefficients of the first region are within the predetermined value range, or information of a bit stream of the second flag information indicating that one or more coefficients of the first region are beyond the predetermined value range, in response to the decoded information of bit streams for classification modes of the mode decoding unit 302, and outputs the decoded information of bit streams to the coefficient decoding unit 306.

The coefficient decoding unit 306 receives the decoded information of bit streams of the first flag information or the second flag information from the flag information decoding unit 304, decodes information of bit streams of coefficients of the conversion block, and outputs the decoded information to the second inverse quantization & inverse conversion unit 308.

The second inverse quantization & inverse conversion unit 308 inverse quantizes and inverse converts the decoded coefficients of the conversion block received from the coefficient decoding unit 306, and outputs the inverse quantized and inverse converted coefficients to the second RGB signal decoding unit 310.

The second RGB signal decoding unit 310 receives the inverse quantized and inverse converted coefficients from the second inverse quantization & inverse conversion unit 308, and decodes the RGB signal of the inverse quantized and inverse converted block, and outputs the decoded RGB signal to the second spatial/temporal prediction compensation unit 312.

The second spatial/temporal prediction compensation unit 312 receives the decoded RGB signal from the second RGB signal decoding unit 310, and compensates for spatially predicted pixel values or temporally predicted pixel values of the block having the decoded RGB signal.

As described above, the method of encoding and decoding image data, and the apparatus to perform the method, can increase the compression rate while not degrading the image visibly, and can make it easier to perform real time encoding and decoding of images and to realize hardware to perform the method..

In addition to the above-described embodiments, the method of the present invention can also be implemented by executing computer readable code/instructions in/on a medium, e.g., a computer readable medium. The medium can correspond to any medium/media permitting the storing and/or transmission of the computer readable code. The code/instructions may form a computer program.

The computer readable code/instructions can be recorded/transferred on a medium in a variety of ways, with examples of the medium including magnetic storage media (e.g., ROM, floppy disks, hard disks, etc.), optical recording media (e.g., CD-ROMs, or DVDs), and storage/transmission media such as carrier waves, as well as through the Internet, for example. The medium may also be a distributed network, so that the computer readable code/instructions is stored/transferred and executed in a distributed fashion. The computer readable code/instructions may be executed by one or more processors.

Although a few embodiments of the present invention have been shown and described, it would be appreciated by those skilled in the art that changes may be made in these embodiments without departing from the principles of the invention, the scope of which is defined in the claims.

## Claims

1. An image data encoding method comprising:
converting and quantizing pixel values of a block to form a conversion block of image data;
determining a classification mode used to classify the conversion block into a first region having one or more coefficients other than 0, and a second region having all coefficients of 0, based on a diagonal of the conversion block; and
generating bit streams for the coefficients of the first region according to the determined classification mode and a first bit depth indicating a bit number required to binarize coefficients of the conversion block.

2. The image data encoding method of claim 1, wherein during the generation of the bit streams, only a bit stream for identification information of the classification mode is generated in response to all of the coefficients of the conversion block being 0.

3. The image data encoding method of claim 1 or 2, wherein during the generation of the bit streams, bit streams for the pixel values of the block are generated in response to a total bit number of bit streams generated for the coefficients of the first region being greater than or equal to a total bit number of the bit streams generated for the pixel values of the block.

4. The image data encoding method of any preceding claim, further comprising:
spatially predicting pixel values of the block using blocks spatially adjacent to the block, or temporally predicting pixel values of the block using a temporally previous frame of the block, before converting and quantizing the pixel values of the block.

5. The image data encoding method of any preceding claim, further comprising:
removing redundant information among RGB pixel values of the block, and encoding an RGB signal having no redundant information, before converting and quantizing the pixel values of the block.

6. The image data encoding method of any preceding claim, further comprising:
determining a second bit depth indicating a bit number required to binarize coefficients of the first region according to whether the coefficients of the first region are within a predetermined value range, before generating the bit streams of the coefficients.

7. The image data encoding method of claim 6, wherein the determining the second bit depth comprises:
determining whether all the coefficients of the first region are within the predetermined value range;
establishing first flag information indicating that all the coefficients of the first region are within the predetermined value range in response to all the coefficients of the first region being within the predetermined value range;
determining the second bit depth in response to the established first flag information;
establishing second flag information indicating that one of more coefficients of the first region are beyond the predetermined value range in response to the one or more coefficients of the first region being beyond the predetermined value range; and
generating the bit streams for the coefficients of the first region corresponding to the second bit depth in response to the first flag information being established, and generating the bit streams for the coefficients of the first region corresponding to the first bit depth in response to the second flag information being established.

8. The image data encoding method of claim 7, wherein the second bit depth is determined according to types of classification modes and predetermined value ranges.

9. The image data encoding method of claim 7, wherein the second bit depth is determined as a fixed bit depth.

10. The image data encoding method of any preceding claim, further comprising:
determining whether a compression rate of the block is necessarily adjusted after determining the classification mode; and
re-establishing the first bit depth and repeating the converting and quantizing of the pixel values of the block in response to the compression rate being necessarily adjusted.

11. An image data decoding method comprising:
decoding information of a first bit depth indicating a bit number required to binarize coefficients of a conversion block, the conversion block being a block of image data having converted and quantized pixel values;
decoding information of bit streams for a classification mode used to classify the conversion block into a first region having one or more coefficients other than 0, and a second region having all coefficients of 0, based on a diagonal of the conversion block;
decoding information of bit streams for the coefficients of the conversion block; and
inverse quantizing and inverse converting the decoded coefficients of the conversion block.

12. The image data decoding method of claim 11, further comprising:
decoding a bit stream of first flag information indicating that the coefficients of the first region are within a predetermined value range, or a bit stream of second flag information indicating that one or more coefficients of the first region are beyond the predetermined value range, after decoding the information of the bits streams for the classification mode.

13. The image data decoding method of claim 11 or 12, further comprising:
decoding an RGB signal of the inverse quantized and inverse converted block.

14. The image data decoding method of claim 11, 12 or 13, further comprising:
compensating for spatially or temporally predicted pixel values of the inverse quantized and inverse converted block.

15. An image data encoding apparatus comprising:
a conversion & quantization unit to convert and quantize pixel values of a block to form a conversion block;
a mode determination unit to determine a classification mode used to classify the conversion block into a first region having one or more coefficients other than 0 and a second region having all coefficients of 0 based on a diagonal of the conversion block; and
a bit stream generation unit to generate bit streams of the coefficients of the first region according to the determined classification mode and a first bit depth indicating a bit number required to binarize coefficients of the conversion block.

16. The image data encoding apparatus of claim 15, wherein the bit stream generation unit generates a bit stream only for identification information of the classification mode in response to all the coefficients of the conversion block being 0.

17. The image data encoding apparatus of claim 15 or 16, wherein the bit stream generation unit generates bit streams for pixel values of the block in response to a total bit number of bit streams generated for the coefficients of the first region being greater than or equal to a total bit number of bit streams generated for pixel values of the block.

18. The image data encoding apparatus of any one of claims 15 to 17, further comprising:
a temporal/spatial prediction unit to spatially predict the pixel values of the block using spatially adjacent blocks, or to temporally predict the pixel values of the block using a previous frame of the block;
a first inverse quantization & inverse conversion unit to inverse quantize and inverse convert the converted and quantized coefficients; and
a first temporal/spatial prediction compensation unit to compensate for the spatially or temporally predicted pixel values.

19. The image data encoding apparatus of any one of claims 15 to 18, further comprising:
an RGB signal encoding unit to remove redundant information among RGB pixel values of the block, and to encode an RGB signal having no redundant information;
a first inverse quantization & inverse conversion unit to inverse quantize and inverse convert the converted and quantized coefficients; and
a first RGB signal decoding unit to decode the RGB signal of the conversion block.

20. The image data encoding apparatus of any one of claims 15 to 19, further comprising:
a bit depth determination control unit to control determination of a second bit depth indicating a bit number required to binarize the coefficients of the first region according to whether all the coefficients of the first region are within a predetermined value range.

21. The image data encoding apparatus of claim 20, wherein the bit depth determination control unit comprises:
a coefficient range checking unit to determine whether all the coefficients of the first region are within the predetermined value range;
a flag information establishing unit to establish first flag information indicating that all the coefficients of the first region are within the predetermined value range, or second flag information indicating that one or more coefficients of the first region are beyond the predetermined value range, in response to the determination result of the coefficient range checking unit; and
a bit depth determination unit to determine the second bit depth in response to the first flag information being established by the flag information establishing unit,
wherein the bit stream generation unit generates the bit streams for the coefficients of the first region corresponding to the second bit depth in response to the first flag information being established, and otherwise generates the bit streams of coefficients of the first region corresponding to the first bit depth.

22. The image data encoding apparatus of claim 21, wherein the bit depth determination unit determines the second bit depth according to types of classification modes and predetermined value ranges.

23. The image data encoding apparatus of claim 21, wherein the bit depth determination unit determines the second bit depth as a fixed bit depth.

24. The image data encoding apparatus of any one of claims 15 to 23, further comprising:
a compression rate adjustment request determination unit to determine whether adjustment of a compression rate of the block is requested; and
a bit depth reestablishment unit to reestablish the first bit depth in response to the determined result by the compression rate adjustment request determination unit.

25. An image data decoding apparatus comprising:
a bit depth decoding unit to decode information of a first bit depth indicating a bit number required to binarize coefficients of a conversion block, the conversion block being a block of image data having converted and quantized pixel values;
a mode decoding unit to decode information of bit streams for a classification mode used to classify the conversion block into a first region having one or more coefficients other than 0, and a second region having all coefficients of 0, based on a diagonal of the conversion block;
a coefficient decoding unit to decode information of bit streams for the coefficients of the conversion block; and
an inverse quantization & inverse conversion unit to inverse quantize and inverse convert the decoded coefficients of the conversion block.

26. The image data decoding apparatus of claim 25, further comprising:
a flag information decoding unit to decode a bit stream of first flag information indicating that the coefficients of the first region are within a predetermined value range, or a bit stream of second flag information that one or more coefficients of the first region are beyond the predetermined value range.

27. The image data decoding apparatus of claim 25 or 26, further comprising:
an RGB signal decoding unit to decode an RGB signal of the inverse quantized and inverse converted block.

28. The image data decoding apparatus of claim 25, 26 or 27, further comprising:
a spatial/temporal prediction compensation unit to compensate for spatially predicted pixel values or temporally predicted pixel values of the inverse quantized and inverse converted block.

29. A computer program comprising computer program code means adapted to perform all the step of any one of claims 1 to 14 when said program is run on a computer.

30. A computer program as claimed in claim 29 embodied on a computer readable medium.

31. An image data encoding method comprising:
converting and quantizing pixel values of a block of image data;
classifying the block into a first region having at least one non-zero coefficient, and a second region having all zero coefficients; and
generating bit streams for the coefficients of the first region according to the classification.

32. The method of claim 31, wherein the bit streams are generated corresponding to a bit depth indicating a bit number required to binarize the coefficients of the block.

33. The method of claim 31, wherein the first and second regions are based on a diagonal of the block of image data.
